# EUROPEAN PATENT APPLICATION

(11) **EP 3 190 286 A1**
(43) Date of publication of application: **12.07.2017**
(21) Application number: 16202557.1
(22) Date of filing: 07.12.2016
(51) Int. Cl.: F02K 3/06, F02C 7/057, F02C 7/277

(54) **GAS TURBINE ENGINE**

(30) Priority: 06.01.2016 GB 201600180
(71) Applicant: Rolls-Royce plc, London SW1E 6AT (GB)
(72) Inventor: Knight, Glenn, Derby, Derbyshire DE24 8BJ (GB); Maguire, Alan, Derby, Derbyshire DE24 8BJ (GB); Robinson, Daniel, Derby, Derbyshire DE24 8BJ (GB); Sheaf, Christopher, Derby, Derbyshire DE24 8BJ (GB); Bostock, George, Derby, Derbyshire DE24 8BJ (GB)
(74) Representative: Rolls-Royce plc

(57) **Abstract**

A gas turbine engine (10) comprising an intake (12), a fan (13) and an injector system (122), is disclosed. The intake has an inner wall which defines an intake passage for the fan. The injector system comprises a cabin blower system comprising a cabin blower compressor (32) arranged in use to compress fluid used in a cabin of an aircraft and by the injector system. The intake comprises an injector (124,126) of the injector system through which in use fluid from the cabin blower compressor is injected into a main airflow for flow control of air on the way to the fan.

## Description

The present disclosure concerns gas turbine engines, aircraft using such gas turbine engine and methods of operating such aircraft.

In the field of gas turbine turbofan engines lower fan pressure ratios are potentially advantageous because moving more air at a slower rate is a more efficient method of achieving a given thrust. In the field of civil aviation in particular, this is fuelling a drive towards so called 'low speed fans' of increased diameter. Disadvantageously however, larger fans tend to require larger intakes to supply them with air and larger intakes increase weight and drag, tending to erode the benefit offered by the larger fan. This problem can be partially mitigated by reducing the thickness of the inlet cowl, but this in turn tends to increase the likelihood of flow separation and stagnation problems impacting on engine stability, noise and efficiency.

One solution to this is to inject fluid at strategic locations to reduce or prevent flow separation and stagnation. Nonetheless flow separation and stagnation difficulties tend to be most pronounced where an aircraft is operating at slower speeds. In such operational regimes bleeding air from a core compressor for supplying the injectors is particularly punitive to engine cycle temperatures.

According to a first aspect there is provided a gas turbine engine comprising optionally an intake, optionally a fan and optionally an injector system, where the intake optionally has an inner wall which optionally defines an intake passage for the fan, and the injector system optionally comprises a cabin blower system optionally comprising a cabin blower compressor optionally arranged in use to compress fluid used in a cabin of an aircraft and by the injector system, and where further the intake optionally comprises an injector of the injector system through which in use fluid from the cabin blower compressor is optionally injected into a main airflow for flow control of that airflow on the way to the fan.

The action of the injector may reduce or prevent separation of the main airflow as it enters the intake passage. This in turn may allow use of an intake having a thinner walled design or a reduced length, allowing reduced drag and/or reduced weight and/or a larger intake area without significantly impacting on engine stability, noise or efficiency. Difficulties in terms of main airflow separation may be most pronounced where an associated aircraft is operating at lower speed (e.g. take-off or descent). Advantageously such occasions may naturally coincide with a particular surplus of cabin blower compressor fluid because the demands on cabin pressurisation may be lower (lower operational speeds tending to coincide with lower altitude operation and therefore reduced cabin pressurisation requirement). Cabin blower compressor systems are typically designed with considerable margin such that an aircraft cabin can be supplied with sufficient pressurised fluid even in the event of an engine failure. The present aspect may therefore provide a valuable use for excess cabin blower compressor derived fluid at a time when the demand for it in terms of cabin pressurisation is least. A further synergistic benefit of using cabin blower compressor derived fluid is that any speed change mechanism for the compressor principally provided with a view to varying the cabin compressed fluid supply may also benefit the injector system.

In some embodiments the injector is positioned to inject fluid into the airflow inside of the intake passage. It may be for example that the injector is located on the inner wall of the intake. The injected fluid may re-energise lower energy fluid flow in a boundary layer of the main airflow by entraining higher energy fluid flow of the main airflow from outside of the boundary layer. Introducing and entraining this higher energy fluid flow may reduce or prevent boundary layer separation.

In some embodiments the intake comprises a lip region, a throat region and a diffuser region and the injector is positioned to inject fluid into the airflow inside of the intake passage downstream of the lip region.. Separation of main airflow air away from the inner wall tends to occur downstream of a leading edge of the intake. Where an intake is prone to diffuser separation, siting the injector in the throat region or diffuser region may therefore re-energise the boundary layer and reduce or prevent separation.

It may be that the injector is located in the lip region, the throat region or the diffuser region. The location may be selected to provide a desired aerodynamic effect. For instance a lip region injector may stabilise the main airflow under ground operation at low forward speed, or operation under incidence of yaw conditions in flight. A diffuser region injector may reduce a momentum deficit of the boundary layer as it approaches tips of the fan blades. This may enhance intake and fan compatibility performance.

In some embodiments the injector directs injected fluid towards the fan.

In some embodiments the injector directs injected fluid in a direction substantially parallel to the inner wall of the intake.

In some embodiments the injector is positioned to inject fluid into the airflow outside of the intake passage. It may be for example that the injector is located on an outer wall of the inlet. Specifically the injector may be positioned to inject fluid into the airflow outside of an intake highlight on an external surface of the lip region. Main airflow air is drawn into an inlet of the intake from many directions. During low speed operation some main airflow air is drawn from radially outwards of the intake and along the outer wall of the intake. Such air tends to impact on the outer wall and stagnate there. Injecting fluid into such airflow may relieve high acceleration rates on the airflow as it is turned to follow the outer wall by fluidically modifying the outer wall contour. The injected fluid may also re-energise airflow close to the outer wall, relieving adverse pressure gradients and reducing separation. This may improve conditioning of the air for stable entry into the intake passage.

In some embodiments the intake comprises a lip region, a throat region and a diffuser region and the injector is positioned to inject fluid into the airflow outside of the intake passage proximate the throat region.

In some embodiments the injector directs injected fluid in a direction that lies between substantially normal to an outer wall of the intake and substantially parallel thereto in a direction towards an inlet to the intake. Fluid directed in this way may increase the momentum of boundary layer airflow adjacent the outer wall, reducing boundary layer velocity gradients to promote greater flow stability.

In some embodiments the injector system comprises a controller arranged to control operation of the injector. It may be for instance that the controller is arranged to selectively variably control fluid injection from the injector. The control might for example comprise on/off functionality (e.g. the controller might have authority over actuation of a valve for supply of fluid to the injector). In this case it may for instance be that the controller activates injection when the engine enters a particular range of operating regimes or in accordance with detection of a particular event (such as engine operation within a particular speed range). Similarly the controller may deactivate injection when the engine enters an alternative range of operating parameters. Alternatively additional degrees of variability in the control may be provided (for instance the controller might have authority over actuation of a variable valve for the injector). In this case it may be that the controller tailors the pressure of injection to a particular operating regime of the engine. By way of further examples the control system may have the ability to pulse the fluid injected and/or in the case of multiple injectors the control system may selectively supply single or groups of injectors in dependence upon the operating regime of the engine. As will be appreciated the injector system may comprise a plurality of sensors arranged to detect engine operating parameters. The detected engine operating parameters may be used by the controller to determine the operating regime of the engine, or to determine the on-set of a particular event.

In some embodiments the cabin blower system further comprises a transmission and the cabin blower compressor is drivable in use via the transmission, the transmission comprising a toroidal continuously variable transmission giving selectively variable control over the rate at which the cabin blower compressor is driven. The transmission may allow variation in the rate at which the cabin blower compressor is driven and so the quantity and/or pressure of fluid that is generated for use in the cabin and/or injectors. Consequently the performance of the cabin blower compressor can be altered in accordance with the demands of its dependent systems.

In some embodiments the controller is arranged to control the transmission to determine the rate at which the cabin blower compressor is driven in accordance with the requirements for cabin pressurisation and fluid injection by the injectors.

In some embodiments the toroidal continuously variable transmission comprises at least one traction drive through which in use drive is transmitted, the traction drive comprising first and second toroids, the first and second toroids each having one of a pair of opposed toroidal surfaces and there being a set of rotatable variators disposed between the opposed toriodal surfaces and where further the first and second toroids are separated and are drivingly engaged via a wheel of each variator, each wheel running in use on both of the opposed toroidal surfaces.

In some embodiments the transmission further comprises a bypass drive transmission parallel to the toroidal continuously variable transmission. The toroidal continuously variable transmission may be a relatively inefficient way of delivering all drive. Thus if a direct bypass drive transmission is also provided, the toroidal continuously variable transmission may be principally used to vary the output of the direct drive. In this way the transmission efficiency may be increased.

In some embodiments the transmission is arranged such that in use drive from the toroidal continuously variable transmission and the bypass drive transmission is combined and delivered to the cabin blower compressor. It may be for example that the drive is combined in a differential planetary gearbox.

In some embodiments drive to the transmission in use is provided by one or more shafts of the gas turbine engine.

In some embodiments the fan has a diameter in excess of 55 inches.

For simplicity the statements of invention above make reference only to a single injector. As will be appreciated however the injector system may have multiple such injectors and thus references to a single injector above should be considered to further contemplate multiple such injectors. It may for instance be that in some embodiments there is at least one injector positioned to inject fluid into the airflow inside of the intake passage as previously described and at least one injector positioned to inject fluid into the airflow outside of the intake passage as previously described. Further an injector positioned to inject fluid into the airflow inside of the intake passage may form part of an array of similar circumferentially distributed injectors. It may even be that the axial location of the injectors in such a circumferentially distributed array can be varied, for instance to better account for alterations in peak flow overspeed at the intake lip region with variation in flight speed, incidence, yaw and crosswind. Similarly an injector positioned to inject fluid into the airflow outside of the intake passage may form part of an array of similar circumferentially distributed injectors. Further the controller may control operation of multiple and perhaps all injectors, for instance via a plurality of valves having ganged operation.

According to a second aspect there is provided an aircraft comprising a gas turbine engine according to the first aspect.

In some embodiments the aircraft comprises at least two gas turbine engines according to the first aspect.

In some embodiments the aircraft comprises at least one inter-engine duct via which fluid compressed by the cabin blower compressor of one of the engines is selectively deliverable to the injector system injectors of another of the engines. In this way, if there is a cabin blower compressor failure of one engine, injector fluid delivery may be maintained for that engine by providing cabin blower compressor air from another engine.

According to a third aspect there is provided a method of operating an aircraft, the aircraft comprising at least two gas turbine engines according to the first aspect and at least one inter-engine duct via which air compressed by the cabin blower compressor of one of the engines is selectively deliverable to the injector system injectors of another of the engines, the method comprising, delivering air from one of the engines having an operational cabin blower compressor to the injectors of the other engine via the inter-engine duct when the cabin blower compressor of that other engine is operating sub-normally and/or is inoperative.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

Embodiments will now be described by way of example only, with reference to the Figures, in which:
**Figure** 1 is a sectional side view of a gas turbine engine;
**Figure 2** is a schematic depiction of an aircraft cabin blower system in accordance with an embodiment of the invention;
**Figure 3** is a cross-sectional view showing a transmission in accordance with an embodiment of the invention, the transmission being in a forward configuration;
**Figure 4** is a cross-sectional view showing a transmission in accordance with an embodiment of the invention, the transmission being in a reverse configuration;
**Figure 5** is a cross-sectional view showing a portion of a gas turbine engine in accordance with an embodiment of the invention;
**Figure 6** is a schematic depiction of an aircraft comprising an inter-engine duct in accordance with an embodiment of the invention.

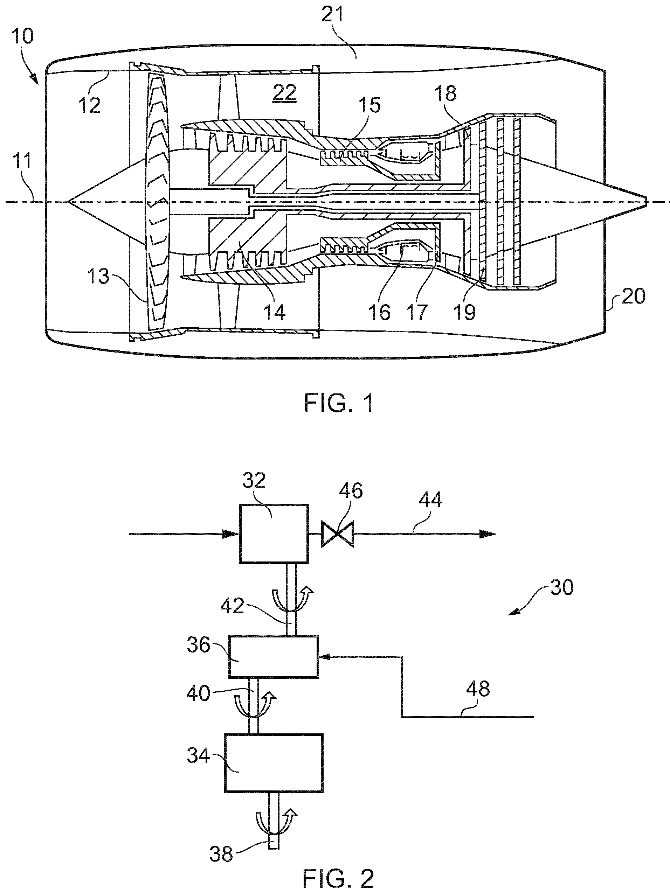

With reference to Figure 1, a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shaft.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

Referring now to Figure 2 an aircraft cabin blower system is generally provided at 30.

The cabin blower system 30 has a shaft of a gas turbine engine (not shown) and a cabin blower compressor 32 connected in a driving relationship. In the drive path intermediate the gas turbine engine shaft and cabin blower compressor 32 are an accessory gearbox 34 of the gas turbine engine and a transmission 36. The shaft of the gas turbine engine and the accessory gearbox 34 are drivingly coupled by an accessory gearbox shaft 38. The accessory gearbox 34 and transmission 36 are drivingly coupled by an intermediate shaft 40. The transmission 36 and cabin blower compressor 32 are drivingly coupled by a compressor shaft 42. As will be appreciated, in other embodiments variations to the arrangement above are possible. It may be for instance that the accessory gearbox 34 could be omitted from the drive path and the intermediate shaft 40 drivingly coupling the transmission 36 directly to the shaft of the gas turbine engine.

The cabin blower compressor 32 is disposed in a duct system 44 connecting a scoop (not shown) on an outer wall of a bypass duct (not shown) of the gas turbine engine and aircraft cabin air conditioning outlets (not shown). Between the cabin blower compressor 32 and air conditioning outlets in the duct system 44 is a starter air shut off valve 46. The shut-off valve 46 is arranged to be operable to alternatively allow one of two conditions. In a first condition the valve 46 permits the flow of air from the cabin blower compressor 32 towards the air conditioning outlets and seals communication between the duct system 44 and a starter conduit (not shown). The starter conduit connects the duct system 44 at the location of the valve 46 and a port to atmosphere. In a second condition the valve 46 permits flow from the starter conduit towards the cabin blower compressor 32 and prevents flow towards the air conditioning outlets.

Between the cabin blower compressor 32 and the valve 46 is an array of variable exit guide vanes (not shown) disposed immediately adjacent the cabin blower compressor 32.

The system 30 has both a forward and a reverse configuration which in use allow the system 30 to perform as a cabin blower or as part of a starter system for the gas turbine engine respectively.

In the forward configuration the cabin blower compressor 32 is driven by the gas turbine engine shaft via the accessory gearbox shaft 38, the accessory gearbox 34, the intermediate shaft 40, the transmission 36 and the compressor shaft 42. The cabin blower compressor 32, driven by the gas turbine engine shaft, compresses air collected by the scoop and delivered to the cabin blower compressor 32 via the duct system 44. This compressed air is conditioned by the variable exit guide vanes, positioned accordingly, to convert radial velocity kinetic energy of the air into higher static pressure, allowing it to be turned with less loss. The variability of the exit guide vanes means that a wider range of air flow rates, velocities and pressures can be effectively conditioned. Thereafter the air is delivered by the duct system 44 for regulated use in the cabin of the aircraft via the air conditioning outlets. The starter air shut-off valve 46 is placed in its first condition so as to permit flow towards the air conditioning outlets and to prevent losses to atmosphere via the starter conduit. The rate at which the cabin blower compressor 32 is driven is controlled via the transmission 36, the gearing of which is controlled via a control signal 48 from a controller (not shown).

In the reverse configuration the cabin blower compressor 32 acts as a turbine and drives the gas turbine engine shaft via the compressor shaft 42, transmission 36, intermediate shaft 40, accessory gearbox 34 and accessory gearbox shaft 38. The cabin blower compressor 32 is driven by gas (typically air) supplied from an external source via the starter conduit. With the valve 46 in its second condition gas supplied by the external source is supplied to the cabin blower compressor 32 in order to drive it, while losses to the air conditioning outlets are prevented. The variable exit guide vanes, positioned accordingly, are used to direct the gas delivered via the starter conduit so as to encourage efficient driving of the cabin blower compressor 32 in the opposite direction to its rotation when the system 30 is operating in the forward configuration. Furthermore the transmission 36 is adjusted so that despite the rotation of the cabin blower compressor 32 in the opposite direction to that when the system 30 is operated in the first configuration, the drive direction delivered to the shaft of the gas turbine engine is common to the direction of rotation of the same shaft when the system 30 is operated in the first configuration.

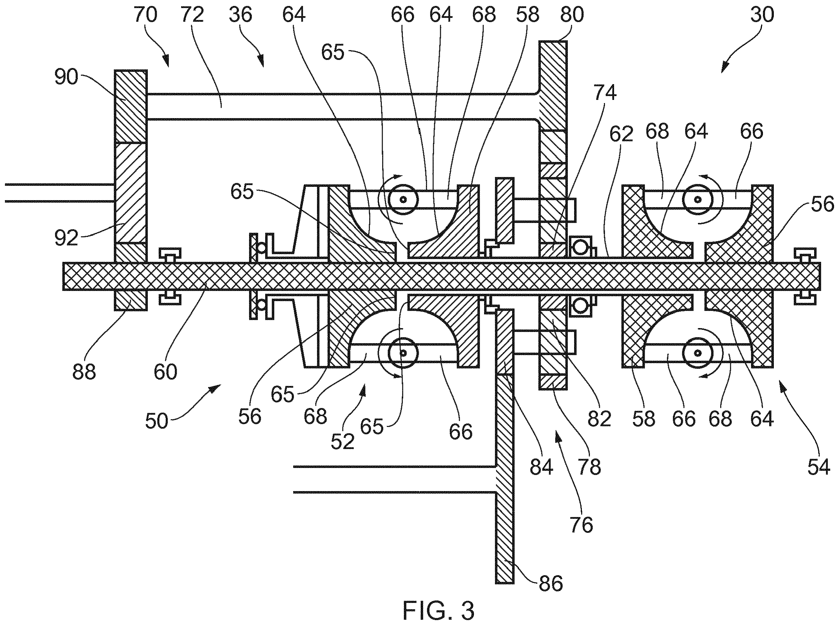

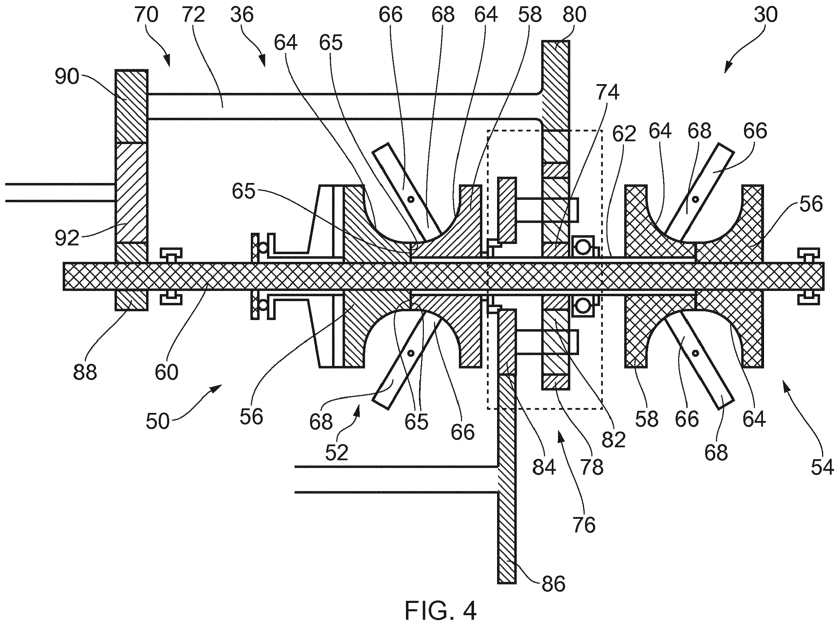

Referring now to Figures 3 and 4 the transmission 36 and in particular it's first (Figure 3) and second (Figure 4) configurations are described in more detail.

The transmission 36 has a toroidal continuously variable transmission (CVT) generally provided at 50. The toroidal CVT 50 has first 52 and second 54 traction drives. Each traction drive 52, 54 has first 56 and second 58 toroids. The first toroid 56 of each traction drive 52, 54 is provided on and surrounds a first transmission shaft 60. The second toroid 58 of each traction drive 52, 54 is provided on and surrounds a second transmission shaft 62. The first 60 and second 62 transmission shafts are coaxial and the first transmission shaft 60 passes through the second transmission shaft 62. The first transmission shaft 60 is longer than the second transmission shaft 62 in order to accommodate the first toroids 56 provided thereon.

The first 56 and second 58 toroids of each traction drive 52, 54 define a pair of opposed toroidal surfaces 64 and a pair of opposed parallel engagement surfaces 65. Disposed between the opposed toroidal surfaces 64 of each traction drive 52, 54 are a set of rotatable variators 66 (two per traction drive 52, 54 shown). Each variator 66 has a wheel 68 capable of simultaneously engaging and running on the opposed toroidal surfaces 64 of the respective traction drive 52, 54. Each variator 66 is also rotatable about an axis so as to vary the diameter at which the wheel 68 engages each of the opposed toroidal surfaces 64, increasing the diameter for one and reducing it for the other of the opposed toroidal surfaces 64. Each variator 66 is also rotatable to a degree such that the wheel 68 no longer engages one of the opposed toroidal surfaces 64.

The transmission 36 also has a bypass drive transmission 70 having a bypass transmission shaft 72. The bypass transmission shaft is non-coaxial with the first 60 and second 62 transmission shafts and is radially displaced therefrom. The bypass transmission shaft 72 is however parallel to the first 60 and second 62 transmission shafts.

Provided on the second transmission shaft 62 is a first gear of the transmission 74. The first gear 74 is a sun gear of a differential planetary gearbox 76. A ring gear 78 of the gearbox 76 is engaged with a second gear of the transmission 80 provided on the bypass transmission shaft 72. Between and engaged with the sun gear (first gear 74) and ring gear 78 are a plurality of planet gears 82 supported by a planet carrier gear 84. The planet carrier gear 84 is engaged with a compressor gear 86 of the compressor shaft 42. Consequently the planet carrier gear 84 is engaged with the compressor 36. As will be appreciated, in alternative embodiments the first gear 74, second gear 80 and compressor gear 86 may be or may be engaged with alternative of the gears of the differential planetary gearbox 76 mentioned. Indeed each possible combination is considered in order that increased design freedom is available in terms of selecting fundamental gear ratios.

A third gear of the transmission 88 is provided on the first transmission shaft 60 and a fourth gear of the transmission 90 is provided on the bypass transmission shaft 72. The third gear 88 and fourth gear 90 both engage a common gear 92 provided on the intermediate shaft 40. Both the first transmission shaft 60 and bypass transmission shaft 72 are therefore engaged to the shaft of the gas turbine engine.

Referring specifically now to Figure 3, the transmission 36 is shown in the forward configuration. In the forward configuration the first 56 and second 58 toroids of each traction drive 52, 54 are axially separated and the wheels 68 of each variator 66 engage both respective opposed toroidal surfaces 64. Consequently the opposed parallel engagement surfaces 65 are axially separated and therefore non-engaged. Power is delivered to the transmission 36 from the shaft of the gas turbine engine via the intermediate shaft 40 and common gear 92. This drives both the first transmission shaft 60 and bypass transmission shaft 72. The first transmission shaft 60 drives the second transmission shaft 62 via the first 56 and second 58 toroids and the variator wheels 68. The bypass transmission shaft 72 and second transmission shaft 62 provide input drive to the gearbox 76 in opposite directions. Output from the gearbox 76 is via its planet carrier gear 84, via which drive is delivered to the cabin blower compressor 32.

As will be appreciated the rate at which the planet carrier gear 84 spins and therefore the rate at which the compressor 32 is turned will depend on the relative input rates to the gearbox 76 from the bypass transmission shaft 72 and the second transmission shaft 62. These relative rotation rates will determine the combined drive rate outputted via the planet gears 82. Thus because the input from the second transmission 62 is variable in accordance with the rotational position of the variators 66, the rate at which the cabin blower compressor 32 is spun is selectively variable. Control over the rotational position of the variators 66 is in accordance with signals 48 from the controller (not shown). Specifically the signals will determine the position to which the variators 66 are rotated and therefore the diameter of the respective opposed toroidal surfaces 64 at which the wheels 68 engage. The rotation therefore allows adjustment to be made to the gearing between the toroids 56, 58. The signals sent by the controller are in accordance with cabin air conditioning and pressurisation requirements. Because the toroidal CVT 50 is effectively used to modify the drive provided by the bypass drive transmission 70, power transmission may be more efficient than if power was transmitted exclusively via the toroidal CVT 50.

Referring specifically now to Figure 4, the transmission 36 is shown in the reverse configuration. In the reverse configuration the first 56 and second 58 toroids of each traction drive 52, 54 are in direct engagement via their opposed parallel engagement surfaces 65. As will be appreciated the first 56 and second 58 toroids of each traction drive 52, 54 have been forced together by comparison with their position in the first configuration (Figure 3). In order to achieve this the variators 66 are rotated so as their wheels 68 no longer engage the first toroid 56 in each traction drive 52, 54 and so as the rotation is sufficient such that the variators 66 would no longer impede the closing of the axial gap between the toroids 56, 58. Thereafter the toroids 56, 58 of each variator 66 are moved together and forced into a resilient engagement at their opposed parallel engagement surfaces 65 by an end load delivery system 94 comprising a hydraulically actuated piston. Power is delivered to the transmission 36 from the cabin blower compressor 32 driven by an external source of gas and acting as a turbine. Power from the cabin blower compressor 32 is delivered via the compressor shaft 42 and compressor gear 86 to the planet carrier gear 84 and into the gearbox 76. The gearbox 76 drives the second transmission shaft 62 and bypass transmission shaft 72. The second transmission shaft 62 drives the first transmission shaft 60 via the rotationally locked toroids 56, 58 of each traction drive 52, 54. The first transmission shaft 60 and bypass transmission shaft 72 drive the gear of the gas turbine engine via the common gear 92 and intermediate shaft 40. In this way the shaft of the gas turbine engine can be turned and air delivered to combustors before fuel is delivered and ignited.

As will be appreciated, after engine start, the system 30 can be returned to the forward configuration for delivering pressurised cabin air by driving the toroids 56, 58 apart using the end load delivery system 94. Thereafter the variators 66 are rotated so as the wheels 68 are orientated for engagement with both opposed toroidal surfaces 64 before the end load delivery system 94 drives the toroids 56, 58 towards each other until the wheels 68 engage both toroids. As will be appreciated, further temporary separation of the toroids 56, 58 by the end load delivery system 94 may be desirable and/or necessary before the variators 66 are re-oriented so as to be primed for engagement of the engagement surfaces 65 and operation of the system 30 in the reverse configuration.

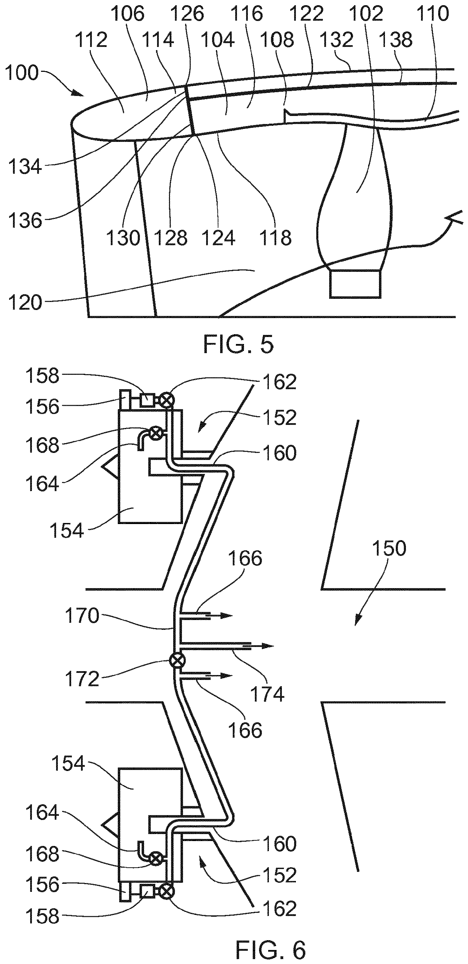

Referring now to Figure 5 a portion of a gas turbine engine (in this case a turbofan) 100 is shown. The gas turbine engine 100 has a fan 102 and an intake 104. The intake 104 is formed by an inlet cowl 106 of a nacelle 108 and a fan case 110. The intake 104 comprises a lip region 112, a throat region 114 and a diffuser region 116. An inner wall 118 of the intake 104 defines an intake passage 120 having at one end an inlet 122 and at the other the fan 102. The intake passage 120 captures and delivers a main airflow to the fan 102.

The gas turbine engine 100 also has an injector system 122 having first 124 and second 126 arrays of injectors. The first injectors 124 are positioned inside of the intake passage 120 at the inner wall 118 and are distributed about a circumference of the inner wall 118 at regular intervals. Each first injector 124 is oriented substantially parallel with the inner wall 118 and has an outlet directed towards the fan 102. The first injectors 124 are positioned proximate a transition between the lip region 112 and throat region 114. Each of the first injectors 124 is in fluid communication with a first injector manifold 128 which itself is in fluid communication with a secondary injector delivery line 130.

The second injectors 126 are positioned outside of the intake passage 120 at an outer wall 132 of the intake 104 and are distributed about a circumference of the outer wall 132 at regular intervals. Each second injector 126 is oriented substantially normal to the outer wall 132, thereby directing injected air substantially normal to the outer wall 132. Each second injector 126 has an outlet flush with the outer wall 132 surface. The second injectors 126 are positioned proximate a transition between the lip region 112 and throat region 114. Each of the second injectors 126 is in fluid communication with a second injector manifold 134 which itself is in fluid communication with a secondary injector delivery line 136.

Both of the secondary injector delivery lines 130, 136 pass into the intake (into the inlet cowl 106) and meet in fluid communication with a primary injector delivery line 138 which passes rearward through the inlet cowl 106 and other nacelle 108 portions. The primary injector delivery line 138 is in fluid communication with the duct system 44 of Figure 2 at a bifurcation (not shown). The bifurcation is provided between the starter air shut off valve 46 and the cabin air conditioning outlets. A variable valve (not shown) is provided in the primary injector delivery line 138 and is controlled by the controller.

In use the first 124 and second 126 injectors are selectively fed with air compressed by the cabin blower compressor 32 via the primary injector delivery line 138. The cabin blower system 30 therefore forms part of the broader injector system 122.

More specifically, when the cabin blower system 30 is operating in the reverse configuration for engine start air is not delivered to the first 124 and second 126 injectors because the starter air shut off valve 46 prevents air delivered by the external source from travelling towards the cabin air conditioning outlets and first 124 and second 126 injectors.

When however the cabin blower system 30 is operated in the forward configuration the controller selectively actuates the variable valve anywhere between and including sealing the primary injector delivery line 138 and fully opening fluid communication between the duct system 44 and the first 124 and second 126 injectors. The controller actuates the variable valve in accordance with a schedule which demands differing injector air supply in dependence upon air speed entering the intake passage 120. Rotation of the variators 66 (to alter the rate at which the cabin blower compressor 32 is driven) is also controlled by the controller, not only in accordance with cabin air conditioning and pressurisation requirements, but also in accordance with the scheduled injector requirements. The controller may therefore be thought of as both an injection controller and a cabin blower controller.

Air injected from the second 126 and first 124 injectors (having a pressure in the approximate range 10 to 50psi in dependence upon flight condition) impinges consecutively on the main airflow as it is drawn from various directions outside of the intake passage 120 to inside the intake passage 120 and passes towards the fan 102. The first 124 and second 126 injectors provide a degree of flow control for this main airflow on its way to the fan 102. Specifically the second injectors 126 tend to condition parts of the main airflow being drawn from outside of the intake passage 120, radially inwards towards the outer wall 132 and then forwards towards the inlet 122, turning about the lip region 112, before entering the intake passage 120. As parts of the main airflow approach the outer wall 132 in a substantially radial direction, air injected from the second injectors 126 tends to turn the main airflow into a flow stream that is substantially parallel to the outer wall 132 and towards the inlet 122. The second injectors 126 tend therefore to reduce main airflow impact on the outer wall 132 and increase flow momentum, turbulence and vorticity at that point. As the main airflow rounds the lip region 112 and enters the throat region 114 air injected by the first injectors 124 increase the flow momentum in a low pressure region adjacent the inner wall 118. This entrains the main airflow in the region of the inner wall 118, re-energising it and tending to prevent boundary layer separation.

By tailoring the quantity of air ejected by the ejectors utilising the variable valve and cabin blower compressor 32, it may be that the ejected air quantity is better matched to counteracting flow stagnation and separation hazards in the main airflow under the particular operating conditions prevailing. Nonetheless a 'fail safe' mode in which a fixed injection rate is supplied is also envisaged. This rate may be selected for suitability in delivery of an acceptably stabilised main airflow under all flight conditions.

Referring now to Figure 6 part of aircraft is generally shown at 150. The aircraft 150 has two gas turbine engines 152. Each engine 152 is associated with a cabin blower system 154 and broader injector system as previously described. Each engine 152 therefore has a cabin blower compressor 156, a transmission 158 and a duct system 160 all as previously described. As before a starter air shut-off valve 162 is provided in each duct system 160. Further a primary injector delivery line 164 is in fluid communication with the duct system 160 at a bifurcation intermediate the air shut-off valve 162 and cabin air conditioning outlets 166. As previously the primary injector delivery line 164 is provided with a variable valve 168.

Linking the duct systems 160 associated with each engine 152 in fluid communication is an inter-engine duct 170. The inter-engine duct 170 is provided with a cross flow valve 172. An auxiliary power unit duct 174 is in fluid communication with the inter-engine duct 170.

In use the inter-engine duct 170 allows air compressed by the cabin blower compressor 156 of one of the engines 152 to deliver air to the injectors of the other engine 152. The controller selectively controls such delivery via the cross flow valve 172. Thus where for example there is a failure or other operational constraint of one engine 152 or the associated cabin blower system 154 in such a manner that air might still be usefully supplied to its injectors from the other engine 152, the cross flow valve 172 may be actuated by the controller to deliver such air from the cabin blower compressor 156 of the other engine 152. Otherwise the cross flow valve 172 may be maintained closed.

The cabin blower compressor 156 of each engine 152 is arranged such that the injector system of one engine 152 has sufficient capacity to meet all normal supply demands of its injectors and the injectors of the further engine 152. This fact in combination with the provision of the inter-engine duct 170 may provide a degree of redundancy for injection in the event of complete or partial failure of an engine.

It will be understood that the invention is not limited to the embodiments above-described and various modifications and improvements can be made without departing from the concepts described herein. By way of example, instead of a single variable valve controlling air supply to the first and second injectors, independent variable valves could be provided in the respective secondary injector delivery lines and controlled by the controller. This would give independent control over the first and second injectors, potentially allowing for greater tailoring of the injected air to particular engine operating conditions. By way of further example the transmission described could have simpler functionality (e.g. no engine start reverse functionality and/or no variable speed functionality). Except where mutually exclusive, any of the features may be employed separately or in combination with any other features and the disclosure extends to and includes all combinations and sub-combinations of one or more features described herein.

## Claims

1. A gas turbine engine comprising an intake, a fan and an injector system, where the intake has an inner wall which defines an intake passage for the fan, and the injector system comprises a cabin blower system comprising a cabin blower compressor arranged in use to compress fluid used in a cabin of an aircraft and by the injector system, and where further the intake comprises an injector of the injector system through which in use fluid from the cabin blower compressor is injected into a main airflow for flow control of that airflow on the way to the fan, and where the injector system comprises a controller arranged to control operation of the injector and the controller is further arranged to control the transmission to determine the rate at which the cabin blower compressor is driven in accordance with the requirements for cabin pressurisation and fluid injection by the injectors.

2. A gas turbine engine according to claim 1 where the injector is positioned to inject fluid into the airflow inside of the intake passage.

3. A gas turbine engine according to claim 1 or claim 2 where the intake comprises a lip region, a throat region and a diffuser region and the injector is positioned to inject fluid into the airflow inside of the intake passage downstream of the lip region.

4. A gas turbine engine according to any preceding claim where the injector directs injected fluid towards the fan.

5. A gas turbine engine according to any preceding claim where the injector directs injected fluid in a direction substantially parallel to the inner wall of the intake.

6. A gas turbine engine according to claim 1 where the injector is positioned to inject fluid into the airflow outside of the intake passage.

7. A gas turbine engine according to claim 6 where the intake comprises a lip region, a throat region and a diffuser region and the injector is positioned to inject fluid into the airflow outside of the intake passage proximate the throat region.

8. A gas turbine engine according to any preceding claim where the cabin blower system further comprises a transmission and the cabin blower compressor is drivable in use via the transmission, the transmission comprising a toroidal continuously variable transmission giving selectively variable control over the rate at which the cabin blower compressor is driven.

9. A gas turbine engine according to claim 8 where the toroidal continuously variable transmission comprises at least one traction drive through which in use drive is transmitted, the traction drive comprising first and second toroids, the first and second toroids each having one of a pair of opposed toroidal surfaces and there being a set of rotatable variators disposed between the opposed toriodal surfaces and where further the first and second toroids are separated and are drivingly engaged via a wheel of each variator, each wheel running in use on both of the opposed toroidal surfaces.

10. A gas turbine engine according to claim 8 or claim 9 where the transmission further comprises a bypass drive transmission parallel to the toroidal continuously variable transmission.

11. A gas turbine engine according to claim 10 where the transmission is arranged such that in use drive from the toroidal continuously variable transmission and the bypass drive transmission is combined and delivered to the cabin blower compressor.

12. A gas turbine engine according to any of claims 8 to 11 where drive to the transmission in use is provided by one or more shafts of the gas turbine engine.

13. An aircraft comprising a gas turbine engine according to any of claims 1 to 12.

14. An aircraft according to claim 13 where the aircraft comprises at least two gas turbine engines according to any of claims 1 to 12 and the aircraft comprises at least one inter-engine duct via which fluid compressed by the cabin blower compressor of one of the engines is selectively deliverable to the injector system injectors of another of the engines.
